# EUROPEAN PATENT APPLICATION

(11) **EP 4 000 774 A1**
(43) Date of publication of application: **25.05.2022**
(21) Application number: 21197672.5
(22) Date of filing: 20.09.2021
(51) Int. Cl.: B22F 10/28, B22F 10/36, B22F 10/366, B33Y 10/00, B33Y 50/02, B29C 64/135, B29C 64/153, B29C 64/268, B29C 64/277

(54) **IRRADIATION REGIMES FOR ADDITIVE MANUFACTURING MACHINES**

(30) Priority: 13.11.2020 US 202017097121
(71) Applicant: General Electric Company, Schenectady, NY 12345 (US); Concept Laser GmbH, 96215 Lichtenfels (DE)
(72) Inventor: Ortner, Jonathan William, 96215 Lichtenfeles, (DE); Franklin, Marques A., Asheville, 28803 (US); Werner, Juergen, 96215 Lichtenfels (DE)
(74) Representative: Hafner & Kohl PartmbB

(57) **Abstract**

A method of additively manufacturing three-dimensional objects may include determining an irradiation regime for a plurality of object elements of a layer of an object to be additively manufactured, and forming the plurality of object elements at least in part by irradiating a layer of a build plane with one or more irradiation devices of the additive manufacturing machine. The plurality of object elements may include a core region and a shell region. The shell region may at least partially surround the core region. The irradiation regime for at least one of the plurality of object elements may include a core-shell irradiation regime. Additionally, or in the alternative, the irradiation regime for at least one of the plurality of object elements may include a core-shell apportioned irradiation regime.

## Description

### FIELD

The present disclosure generally pertains to additive manufacturing machines, and more particularly, to regimes for irradiating object elements of respective layers of a three-dimensional object to be additively manufacturing using an additive manufacturing machine.

### BACKGROUND

Additive manufacturing machines may form three-dimensional objects by solidifying build material with one or more energy beams. The energy beams may have variability attributable to any of a number of irradiation parameters. When a plurality of energy beams are utilized to form three-dimensional objects, it is desirable for the operation of the energy beams to be coordinated with one another.

Accordingly, there exists a need for improved systems and methods for additively manufacturing three-dimensional objects, including improved irradiation regimes for additive manufacturing machines.

### BRIEF DESCRIPTION

Aspects and advantages will be set forth in part in the following description, or may be apparent from the description, or may be learned through practicing the presently disclosed subject matter.

In one aspect, the present disclosure embraces methods of additively manufacturing three-dimensional objects. An exemplary method may include determining an irradiation regime for a plurality of object elements of a layer of an object to be additively manufactured with an additive manufacturing machine. The plurality of object elements may include a core region and a shell region. The shell region may at least partially surround the core region. An exemplary method may include forming the plurality of object elements at least in part by irradiating a layer of a build plane with one or more irradiation devices of the additive manufacturing machine. The irradiation regime for at least one of the plurality of object elements may include a core-shell irradiation regime. Additionally, or in the alternative, the irradiation regime for at least one of the plurality of object elements may include a core-shell apportioned irradiation regime.

In another aspect, the present disclosure embraces computer-readable media. An exemplary computer-readable medium may include computer-executable instructions, which when executed by a processor associated with an additive manufacturing machine or system, causes the additive manufacturing machine or system to perform a method of additively manufacturing a three-dimensional object in accordance with the present disclosure.

These and other features, aspects and advantages will become better understood with reference to the following description and appended claims. The accompanying drawings, which are incorporated in and constitute a part of this specification, illustrate exemplary embodiments and, together with the description, serve to explain certain principles of the presently disclosed subject matter.

### BRIEF DESCRIPTION OF THE DRAWINGS

A full and enabling disclosure, including the best mode thereof, directed to one of ordinary skill in the art, is set forth in the specification, which makes reference to the appended Figures, in which:
FIG. 1 schematically depicts an exemplary additive manufacturing system;
FIG. 2A schematically depicts an exemplary layer of an additively manufactured three-dimensional object irradiated with one energy beam;
FIG. 2B schematically depicts an exemplary layer of an additively manufactured three-dimensional object irradiated with a plurality of energy beams using an apportioned irradiation regime;
FIG. 2C schematically depicts an exemplary layer of an additively manufactured three-dimensional object irradiated with a plurality of energy beams using a core-shell irradiation regime;
FIG. 2D schematically depicts an exemplary layer of an additively manufactured three-dimensional object irradiated with a plurality of energy beams using a core-shell apportioned irradiation regime;
FIGs. 3A-3C schematically depict exemplary variable interlace positions for a core-shell apportioned irradiation regime;
FIGs. 4A-4C schematically depict exemplary variable core sizes for a core-shell apportioned irradiation regime;
FIGs. 5A-5C schematically depict exemplary variable core positions for a core-shell apportioned irradiation regime;
FIGs. 6A-6C schematically depict exemplary variable core-shell overlap regions for a core-shell apportioned irradiation regime;
FIGs. 7A-7C schematically depict exemplary inward and/or outward configurations for a core-shell apportioned irradiation regime;
FIGs. 8A-8C schematically depict exemplary pathway configurations for a core-shell apportioned irradiation regime;
FIG. 9A-9D schematically depict exemplary irradiation regimes for a layer of a build plane that includes a plurality of object elements corresponding to respective ones of a plurality of objects;
FIG. 10 schematically depicts an exemplary control system for an additive manufacturing machine or system;
FIG. 11 schematically depicts an exemplary irradiation control module; and
FIG. 12 shows a flow chart depicting an exemplary method of additively manufacturing a three-dimensional object.

Repeat use of reference characters in the present specification and drawings is intended to represent the same or analogous features or elements of the present disclosure.

### DETAILED DESCRIPTION

Reference now will be made in detail to exemplary embodiments of the presently disclosed subject matter, one or more examples of which are illustrated in the drawings. Each example is provided by way of explanation and should not be interpreted as limiting the present disclosure. In fact, it will be apparent to those skilled in the art that various modifications and variations can be made in the present disclosure without departing from the scope of the present disclosure. For instance, features illustrated or described as part of one embodiment can be used with another embodiment to yield a still further embodiment. Thus, it is intended that the present disclosure covers such modifications and variations as come within the scope of the appended claims and their equivalents.

It is understood that terms "upstream" and "downstream" refer to the relative direction with respect to fluid flow in a fluid pathway. For example, "upstream" refers to the direction from which the fluid flows, and "downstream" refers to the direction to which the fluid flows. It is also understood that terms such as "top", "bottom", "outward", "inward", and the like are words of convenience and are not to be construed as limiting terms. As used herein, the terms "first", "second", and "third" may be used interchangeably to distinguish one component from another and are not intended to signify location or importance of the individual components. The terms "a" and "an" do not denote a limitation of quantity, but rather denote the presence of at least one of the referenced item.

Approximating language, as used herein throughout the specification and claims, may be applied to modify any quantitative representation that could permissibly vary without resulting in a change in the basic function to which it is related. Accordingly, a value modified by a term or terms, such as "about," "substantially," and "approximately," are not to be limited to the precise value specified. In at least some instances, the approximating language may correspond to the precision of an instrument for measuring the value, or the precision of the methods or machines for constructing or manufacturing the components and/or systems. For example, the approximating language may refer to being within a 10 percent margin.

Here and throughout the specification and claims, range limitations are combined and interchanged, such ranges are identified and include all the sub-ranges contained therein unless context or language indicates otherwise. For example, all ranges disclosed herein are inclusive of the endpoints, and the endpoints are independently combinable with each other.

As described herein, exemplary embodiments of the present subject matter involve the use of additive manufacturing machines or methods. As used herein, the term "additive manufacturing" refers generally to manufacturing technology in which components are manufactured in a layer-by-layer manner. An exemplary additive manufacturing machine may be configured to utilize any desired additive manufacturing technology. In an exemplary embodiment, the additive manufacturing machine may utilize an additive manufacturing technology that includes a powder bed fusion (PBF) technology, such as a direct metal laser melting (DMLM) technology, an electron beam melting (EBM) technology, an electron beam sintering (EBS) technology, a selective laser melting (SLM) technology, a directed metal laser sintering (DMLS) technology, or a selective laser sintering (SLS) technology. In an exemplary PBF technology, thin layers of powder material are sequentially applied to a build plane and then selectively melted or fused to one another in a layer-by-layer manner to form one or more three-dimensional objects. Additively manufactured objects are generally monolithic in nature, and may have a variety of integral subcomponents.

As used herein, the term "build plane" refers to a plane defined by a surface upon which an energy beam impinges during an additive manufacturing process. Generally, the surface of a powder bed defines the build plane; however, during irradiation of a respective layer of the powder bed, a previously irradiated portion of the respective layer may define a portion of the build plane, and/or prior to distributing powder material across a build module, a build plate that supports the powder bed generally defines the build plane.

Additionally or alternatively suitable additive manufacturing technologies include, for example, Binder Jet technology, Fused Deposition Modeling (FDM) technology, Direct Energy Deposition (DED) technology, Laser Engineered Net Shaping (LENS) technology, Laser Net Shape Manufacturing (LNSM) technology, Direct Metal Deposition (DMD) technology, Digital Light Processing (DLP) technology, Vat Polymerization (VP) technology, Sterolithography (SLA) technology, and other additive manufacturing technology that utilizes an energy beam.

Additive manufacturing technology may generally be described as enabling fabrication of complex objects by building objects point-by-point, layer-by-layer, typically in a vertical direction; however, other methods of fabrication are contemplated and within the scope of the present disclosure. For example, although the discussion herein refers to the addition of material to form successive layers, the presently disclosed subject matter may be practiced with any additive manufacturing technology or other manufacturing technology, including layer-additive processes, layer-subtractive processes, or hybrid processes.

The additive manufacturing processes described herein may be used for forming components using any suitable material. For example, the material may be metal, ceramic, polymer, epoxy, photopolymer resin, plastic, concrete, or any other suitable material that may be in solid, liquid, powder, sheet material, wire, or any other suitable form. Each successive layer may be, for example, between about 10 µm and 200 µm, although the thickness may be selected based on any number of parameters and may be any suitable size according to alternative embodiments.

The present disclosure generally pertains to regimes for irradiating object elements of respective layers of an additively manufactured three-dimensional object. The present disclosure provides irradiation regimes that may be carried out using one or more irradiation devices, including singular irradiation regimes that may be carried out with one irradiation device, and apportioned irradiation regimes that may be carried out with a plurality of irradiation devices. The present disclosure also provides core-shell irradiation regimes that include apportioning an object element between a core region and a shell region that surrounds the core region, and core-shell apportioned irradiation regimes, that include apportioning the core region between a plurality of irradiation devices.

In some embodiments, exemplary irradiation regimes may be configured to provide a substantially balanced surface area and/or irradiation time as between a plurality of irradiation devices, and/or as between a plurality of object elements or regions thereof. A core-shell irradiation regime and/or a core-shell apportioned irradiation regime may be configured to provide additively manufactured three-dimensional objects that include a shell region that has enhanced material properties relative to a core region. For example, the shell region may have a lower porosity and/or a higher density than a core region. Such objects may have an outward surface and/or an internal surface corresponding to a shell region that has enhanced surface properties, including enhanced porosity, density, and/or smoothness.

Exemplary core-shell apportioned irradiation regime may provide additively manufactured three-dimensional objects with one or more outward and/or inward surfaces that are free from overlapping regions irradiated with different energy beams. Rather, in some embodiments, the shell region may surround all or a portion of the core region, for example, defining a contiguous outward surface and/or a contiguous inward surface. In some embodiments, quality and/or productivity may be enhanced by confining apportioned irradiation regimes to an internal portion of an object. For example, overlap regions may be discernable with respect to aesthetic and/or quantitative quality. Advantageously, quality may be enhanced by using the presently disclosed irradiation regimes, including the core-shell irradiation regimes and the core-shell apportioned irradiation regime described herein. Additionally, or in the alternative, the presently disclosed irradiation regimes may be configured to balance irradiation times and loading of respective irradiation devices. Advantageously, drift in irradiation parameters that may inherently occur over the service life of an irradiation device may be synchronized among a plurality of irradiation devices using the presently disclosed irradiation regimes. Additionally, or in the alternative, maintenance and service intervals may be synchronized among a plurality of irradiation devices using the presently disclosed irradiation regimes.

As used herein, the term "singular irradiation regime" refers to a regime for forming, by irradiating a layer of a build plane, an object element of an additively manufactured three-dimensional object using one irradiation device, such as a first energy beam from a first irradiation device. A singular irradiation regime may include changes to the irradiation regime with respect to a series of layers of object elements of the additively manufactured three-dimensional object, such as changing irradiation devices in a sequence or pattern of layers of object elements, such as irradiating a first part of a sequence or pattern of layers of object elements with a first energy beam from a first irradiation device and irradiating a second part of the sequence or pattern of layers of object elements with a second energy beam from a second irradiation device.

As used herein, the term "apportioned irradiation regime" refers to a regime for forming, by irradiating a layer of a build plane, an object element of an additively manufactured three-dimensional object using a plurality of irradiation devices with the object element being apportioned into a plurality of regions respectively allocated to corresponding ones of the plurality of irradiation devices, such as a first energy beam from a first irradiation device being allocated to irradiate a first region of the object element and as a second energy beam from a second irradiation device being allocated to irradiate a second region of the object element.

An apportioned irradiation regime may include changes to the irradiation regime with respect to a series of layers of object elements of the additively manufactured three-dimensional object. For example, the configuration and/or arrangement of the plurality of regions may change according to a sequence or pattern of layers of object elements, and/or the allocation of the respective irradiation devices to respective ones of the plurality of regions may change according to a sequence or pattern of layers of object elements. By way of example, an apportioned irradiation regime may include changing a configuration and/or arrangement of the plurality of regions in a sequence or pattern of layers of object elements, such as a first configuration and/or arrangement corresponding to a first part of a sequence or pattern of layers of object elements, and a second configuration and/or arrangement corresponding to a second part of the sequence or pattern of layers of object elements. Additionally, or in the alternative, an apportioned irradiation regime may include irradiating a first region of an object element using a first energy beam from a first irradiation device for a first part of a sequence or pattern of layers of object elements, and irradiating the first region of the object element using a second energy beam from a second irradiation device for a second part of the sequence or pattern of layers of object elements. The apportioned regime may additionally or alternatively include irradiating the second region of the object element using the second energy beam from the second irradiation device for the first part of the sequence or pattern of layers of object elements, and irradiating the second region of the object element using the first energy beam from the first irradiation device for the second part of the sequence or pattern of layers of object elements.

As used herein, the term "core-shell irradiation regime" refers to a regime for forming, by irradiating a layer of a build plane, an object element of an additively manufactured three-dimensional object, with the object element being apportioned into a plurality of regions that includes a core region and a shell region, with the core region at least partially surrounded by the shell region, and with a perimeter of the shell region defining an outward surface and/or an inward surface of the portion of the additively manufactured three-dimensional object corresponding to the object element.

The core region and the shell region may be differentiated from one another at least in part by one or more irradiation parameters that differ as between the core region and the shell region. Exemplary irradiation parameters my include beam power, intensity, intensity profile, energy density, spot size, spot shape, scanning pattern, scanning speed, and so forth. For example, a core region of an object element may be irradiated using an irradiation device with an irradiation parameter of an energy beam emitted by the irradiation device at a first setpoint, and shell core region of the object element may be irradiated using the irradiation device with the energy beam emitted by the irradiation device at a second setpoint.

In addition or in the alternative to differentiation based on one or more irradiation parameters, with respect to a core-shell apportioned irradiation regime, the core region and the shell region may be differentiated from one another at least in part by different irradiation devices respectively used to irradiate the core region and the shell region of an object element. In some embodiments, the shell region may surround an entirety of the core region, for example, defining a contiguous outward surface and/or a contiguous inward surface of the portion of the additively manufactured three-dimensional object corresponding to the object element. In some embodiments, an object element may define a portion of a pathway through the core region of the additively manufactured three-dimensional object. The shell region may define a surface of at least part of the portion of the pathway defined by the object element. Additionally, or in the alternative, the shell region may include one or more disjunctions corresponding to a location where the pathway traverses the shell region and/or the core region.

As used herein, the term "core-shell apportioned irradiation regime" refers to a regime for forming, by irradiating a layer of a build plane, an object element of an additively manufactured three-dimensional object using an apportioned irradiation regime in which the plurality of regions includes a core region and a shell region, with the core regions surrounded by the shell region, and with a perimeter of the shell region defining an outward surface and/or an inward surface of the portion of the additively manufactured three-dimensional object corresponding to the object element.

A core-shell apportioned irradiation regime may include a core-shell irradiation regime combined with an apportioned irradiation regime. In some embodiments, the shell region may surround an entirety of the core region, for example, defining a contiguous outward surface and/or a contiguous inward surface of the portion of the additively manufactured three-dimensional object corresponding to the object element. In some embodiments, an object element may include a pathway through the core region and the shell region. The shell region may define a surface of at least part of a pathway through the additively manufactured three-dimensional object defined at least in part by the object element. Additionally, or in the alternative, the shell region may include one or more disjunctions corresponding to a location where the pathway traverses the shell region and/or the core region of the object element.

In some embodiments, with a core-shell apportioned irradiation regime, the first irradiation device and the second irradiation device may be operated with one or more irradiation parameters of the respective energy beam at the same setpoint as between the core region and the shell region, such as beam power, intensity, intensity profile, energy density, spot size, spot shape, scanning pattern, scanning speed, and so forth. For example, a core region of an object element may be irradiated using a first energy beam from a first irradiation device operating with one or more irradiation parameters at a first setpoint, and shell core region of the object element may be irradiated using a second energy beam from a second irradiation device operating with the one or more irradiation parameter at the first setpoint. Additionally, or in the alternative, with a core-shell apportioned irradiation regime, the first irradiation device and the second irradiation device may be operated with one or more irradiation parameters at setpoints that differ as between the core region and the shell region. For example, a core region of an object element may be irradiated using a first energy beam from a first irradiation device operating with a first irradiation parameter at a first setpoint, and a shell region of the object element may be irradiated using a second energy beam from a second irradiation device operating with a second irradiation parameter at a setpoint that differs from the first setpoint.

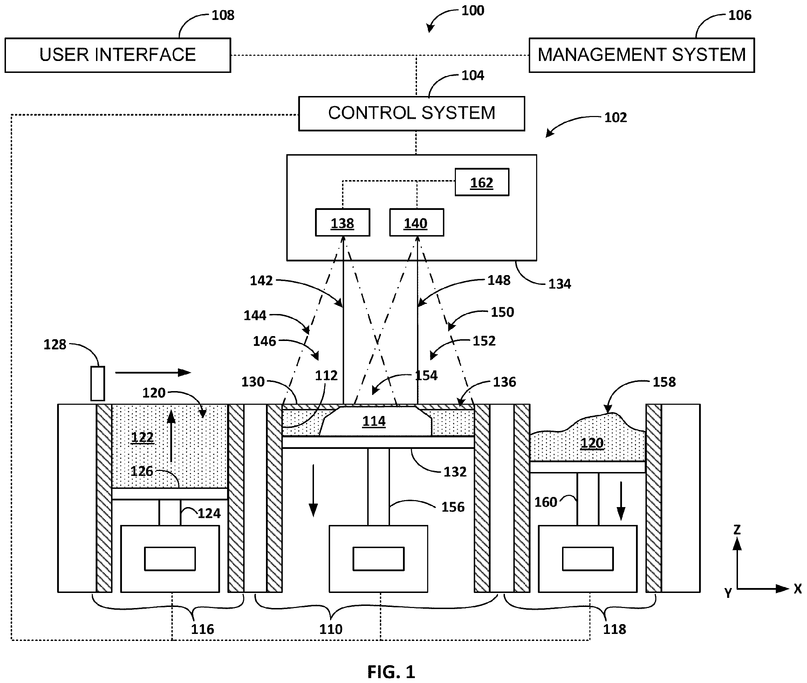

Exemplary embodiments of the present disclosure will now be described in further detail. FIG. 1 schematically depicts an exemplary additive manufacturing system 100. The additive manufacturing system 100 may include one or more additive manufacturing machines 102. The one or more additive manufacturing machines 102 may include a control system 104. The control system may include componentry integrated as part of the additive manufacturing machine 102 and/or componentry that is provided separately from the additive manufacturing machine 102. Various componentry of the control system 104 may be communicatively coupled to various componentry of the additive manufacturing machine 102.

The control system 104 may be communicatively coupled with a management system 106 and/or a user interface 108. The management system 106 may be configured to interact with the control system 104 in connection with enterprise-level operations pertaining to the additive manufacturing system 100. Such enterprise level operations may include transmitting data from the management system 106 to the control system 104 and/or transmitting data from the control system 104 to the management system 106. The user interface 108 may include one or more user input/output devices to allow a user to interact with the additive manufacturing system 100.

As shown, an additive manufacturing machine 102 may include a build module 110 that includes a build chamber 112 within which an object or objects 114 may be additively manufactured. In some embodiments, an additive manufacturing machine 102 may include a powder module 116 and/or an overflow module 118. The build module 110, the powder module 116, and/or the overflow module 118 may be provided in the form of modular containers configured to be installed into and removed from the additive manufacturing machine 102 such as in an assembly-line process. Additionally, or in the alternative, the build module 110, the powder module 116, and/or the overflow module 118 may define a fixed componentry of the additive manufacturing machine 102.

The powder module 116 contains a supply of powder material 120 housed within a supply chamber 122. The powder module 116 includes a powder piston 124 that elevates a powder floor 126 during operation of the additive manufacturing machine 102. As the powder floor 126 elevates, a portion of the powder material 120 is forced out of the powder module 116. A recoater 128 such as a blade or roller sequentially distributes thin layers of powder material 120 across a build plane 130 above the build module 110. A build platform 132 supports the sequential layers of powder material 120 distributed across the build plane 130.

The additive manufacturing machine 102 includes an energy beam system 134 configured to generate one or more energy beams, such as one or more laser beams, or one or more electron beams, and to direct the respective energy beams onto the build plane 130 to selectively solidify respective portions of the powder bed 136 defining the build plane 130. As the respective energy beams selectively melt or fuse the sequential layers of powder material 120 that define the powder bed 136, the object 114 begins to take shape. Typically with a DMLM, EBM, or SLM system, the powder material 120 is fully melted, with respective layers being melted or re-melted with respective passes of the energy beams. Conversely, with DMLS or SLS systems, typically the layers of powder material 120 are sintered, fusing particles of powder material 120 to one another generally without reaching the melting point of the powder material 120. The energy beam system 134 may include componentry integrated as part of the additive manufacturing machine 102 and/or componentry that is provided separately from the additive manufacturing machine 102.

The energy beam system 134 may include one or more irradiation devices configured to generate a plurality of energy beams and to direct the energy beams upon the build plane 130. The irradiation devices may respectively have an energy beam source, a galvo-scanner, and optical componentry configured to direct the energy beam onto the build plane 130. For the embodiment shown in FIG. 1, the energy beam system 134 includes a first irradiation device 138 and a second irradiation device 140. In other embodiments, an energy beam system 134 may include three, four, six, eight, ten, or more irradiation devices. The plurality of irradiation devise may be configured to respectively generate one or more energy beams that are respectively scannable within a scan field incident upon at least a portion of the build plane 130. For example, the first irradiation device 138 may generate a first energy beam 142 that is scannable within a first scan field 144 incident upon at least a first build plane region 146. The second irradiation device 140 may generate a second energy beam 148 that is scannable within a second scan field 150 incident upon at least a second build plane region 152. The first scan field 144 and the second scan field 150 may overlap such that the first build plane region 146 scannable by the first energy beam 142 overlaps with the second build plane region 152 scannable by the second energy beam 148. The overlapping portion of the first build plane region 146 and the second build plane region 152 may sometimes be referred to as an interlace region 154. Portions of the powder bed 136 to be irradiated within the interlace region 154 may be irradiated by the first energy beam 142 and/or the second energy beam 148 in accordance with the present disclosure.

To irradiate a layer of the powder bed 136, the one or more irradiation devices (e.g., the first irradiation device 138 and the second irradiation device 140) respectively direct the plurality of energy beams (e.g., the first energy beam 142 and the second energy beam 148) across the respective portions of the build plane 130 (e.g., the first build plane region 146 and the second build plane region 152) to melt or fuse the portions of the powder material 120 that are to become part of the object 114. The first layer or series of layers of the powder bed 136 are typically melted or fused to the build platform 132, and then sequential layers of the powder bed 136 are melted or fused to one another to additively manufacture the object 114.

As sequential layers of the powder bed 136 are melted or fused to one another, a build piston 156 gradually lowers the build platform 132 to make room for the recoater 128 to distribute sequential layers of powder material 120. As the build piston 156 gradually lowers and sequential layers of powdered material 120 are applied across the build plane 130, the next sequential layer of powder material 120 defines the surface of the powder bed 136 coinciding with the build plane 130. Sequential layers of the powder bed 136 may be selectively melted or fused until a completed object 114 has been additively manufactured.

In some embodiments, an additive manufacturing machine may utilize an overflow module 118 to capture excess powder material 120 in an overflow chamber 158. The overflow module 118 may include an overflow piston 160 that gradually lowers to make room within the overflow chamber 158 for additional excess powder material 120.

It will be appreciated that in some embodiments an additive manufacturing machine may not utilize a powder module 116 and/or an overflow module 118, and that other systems may be provided for handling powder material 120, including different powder supply systems and/or excess powder recapture systems. However, the subject matter of the present disclosure may be practiced with any suitable additive manufacturing machine without departing from the scope hereof.

Still referring to FIG. 1, in some embodiments, an additive manufacturing machine 102 may include a monitoring system 162. The monitoring system 162 may be configured to detect a monitoring beam (not shown) such as an infrared beam from a laser diode and/or a reflected portion of an energy beam, and to determine one or more parameters associated with irradiating the sequential layers of the powder bed 136 based at least in part on the detected monitoring beam. The one or more parameters determined by the monitoring system 162 may be utilized, for example, by the control system 104, to control one or more operations of the additive manufacturing machine 102 and/or of the additive manufacturing system 100. The monitoring system 162 may be configured to project a monitoring beam (not shown) and to detect a portion of the monitoring beam reflected from the build plane 130. Additionally, and/or in the alternative, the monitoring system 162 may be configured to detect a monitoring beam that includes radiation emitted from the build plane, such as radiation from an energy beam reflected from the powder bed 136 and/or radiation emitted from a melt pool in the powder bed 136 generated by an energy beam and/or radiation emitted from a portion of the powder bed 136 adjacent to the melt pool.

The monitoring system 162 may include componentry integrated as part of the additive manufacturing machine 102 and/or componentry that is provided separately from the additive manufacturing machine 102. For example, the monitoring system 162 may include componentry integrated as part of the energy beam system 134. Additionally, or in the alternative, the monitoring system 162 may include separate componentry, such as in the form of an assembly, that can be installed as part of the energy beam system 134 and/or as part of the additive manufacturing machine 102.

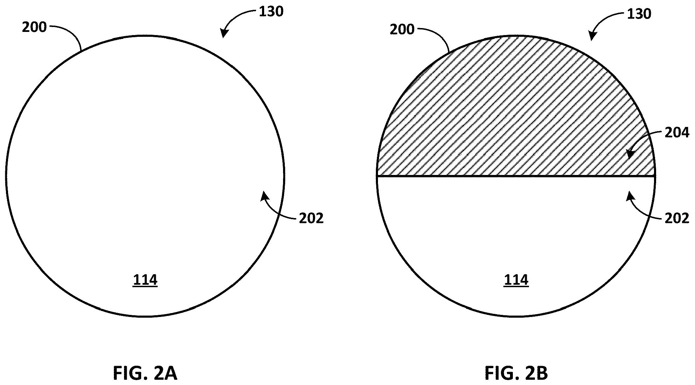

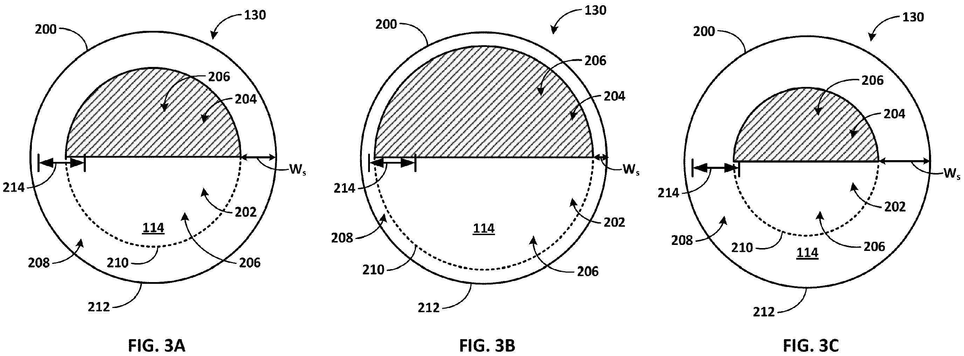

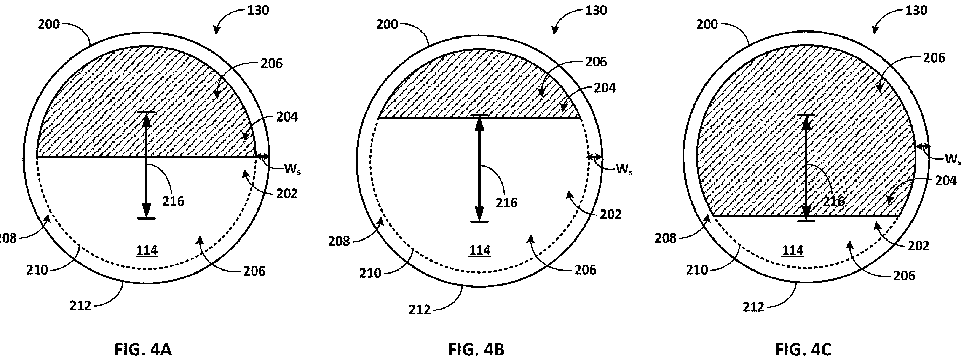

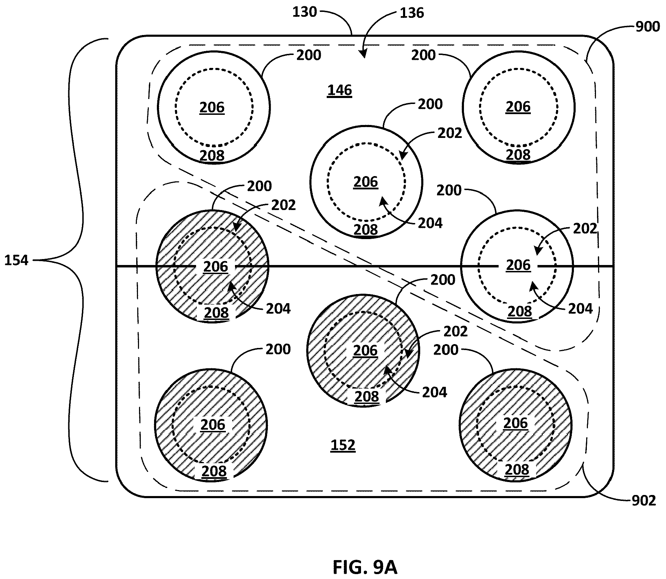

Referring now to FIGs. 2A-2D, FIGs. 3A-3C, FIGs. 4A-4C, FIGs. 5A-5C, FIGs. 6A-6C, FIGs. 7A-7C, FIGs. 8A-8C, and FIGs. 9A-9D, exemplary irradiation regimes for an object element 200 will be described. A plurality of object elements 200 may be sequentially irradiated to form an additively-manufactured three-dimensional object 114, for example, using one or more of the irradiation regimes described herein. FIGs. 2A-2D, FIGs. 3A-3C, FIGs. 4A-4C, FIGs. 5A-5C, FIGs. 6A-6C, FIGs. 7A-7C, and FIGs. 8A-8C schematically depict an exemplary build plane 130 defined at least in part by a layer of an additively manufactured three-dimensional object 114. FIGs. 9A-9D schematically depicts an exemplary build plane 130 defined at least in part by a powder bed 136 and a layer of a plurality of additively manufactured three-dimensional objects 114. The build plane 130 shown in FIGs. 9A-9D may include the layer of the additively manufactured three-dimensional objects 114 shown in FIGs. 2A-2D, FIGs. 3A-3C, FIGs. 4A-4C, FIGs. 5A-5C, FIGs. 6A-6C, FIGs. 7A-7C, and FIGs. 8A-8C. The irradiation regimes described with reference to FIGs. 2A-2D, FIGs. 3A-3C, FIGs. 4A-4C, FIGs. 5A-5C, FIGs. 6A-6C, FIGs. 7A-7C, FIGs. 8A-8C, and FIGs. 9A-9D may be used interchangeably and/or in combination with one another. For example, the irradiation regimes described with reference to FIGs. 3A-3C, may be used interchangeably and/or in combination with the irradiation regimes described with reference to FIGs. 4A-4C, FIGs. 5A-5C, FIGs. 6A-6C, FIGs. 7A-7C, and/or FIGs. 8A-8C.

As described herein, a layer of a build plane 130 may be irradiated by one or more energy beams from an energy beam system 134, such as a first energy beam 142 from a first irradiation device 138 and/or a second energy beam 148 from a second irradiation device 140. As shown in FIGs. 2A-2D, an object element 200 may include a first region 202 irradiated by a first energy beam 142 from a first irradiation device 138. Additionally, or in the alternative, an object element 200 may include a second region 204 irradiated by a second energy beam 148 from a second irradiation device 140. The first irradiation device and the second irradiation device may be operated with one or more irradiation parameters at the same setpoint and/or at different setpoints, such as beam power, intensity, intensity profile, energy density, spot size, spot shape, scanning pattern, scanning speed, and so forth, as between the first region 202 and the second region 204 of the object element 200.

As shown in FIG. 2A, in some embodiments, an object element 200 may be irradiated according to a singular irradiation regime. With a singular irradiation regime, the object element 200 shown in FIG. 2A may be irradiated using one irradiation device. In some embodiments, the singular irradiation regime may include irradiating a first one or more object elements 200 with a first energy beam 142 from a first irradiation device 138. Additionally, or in the alternative, the singular irradiation regime may include irradiating a second one or more object elements 200 with a second energy beam 148 from a second irradiation device 140. The first one or more object elements 200 and the second one or more object elements 200 may be in a sequence or a pattern, such as an alternating sequence. In some embodiments, a plurality of object elements 200 defining all or a portion of an additively manufactured three-dimensional object 114 may be irradiated according to a singular irradiation regime using one irradiation device. In some embodiments, the singular irradiation regime may include irradiating a first plurality of object elements 200, such as a first part of the sequence of object elements 200, with a first energy beam 142 from a first irradiation device 138, and irradiating a second plurality of object elements 200, such as a second part of the sequence or pattern of object elements 200, with a second energy beam 148 from a second irradiation device 140.

As shown in FIG. 2B, in some embodiments, an object element 200 may be irradiated according to an apportioned irradiation regime. With an apportioned irradiation regime, the object element 200 shown in FIG. 2B may be irradiated using a plurality of irradiation devices 138, 140 respectively allocated to irradiate a corresponding portion of the object element 200. For example, a first region 202 of the object element 200 may be irradiated using a first irradiation device 138, and a second region 204 of the object element 200 may be irradiated using a second irradiation device 140. As shown in FIG. 2B, the object element 200 may be divided into two portions, such as the first region 202 and the second region 204. However, it will be appreciated that an apportioned irradiation regime may include an object element 200 divided into any number of a plurality of portions, including three, four, five, ten, or more portions. Additionally, or in the alternative, as shown in FIG. 2B, the object element 200 may be divided into substantially balanced portions, such as portions with substantially balanced surface areas and/or portions with substantially balanced irradiation time. By way of example, the irradiation time of an object element 200 and/or a portion thereof may depend at least in part on one or more irradiation parameters, which may be determined, for example, based at least in part on a geometry and/or a desired material property (such as porosity) resulting from irradiating the object element 200. It will be appreciated that an apportioned irradiation regime may include an object element 200 divided into a plurality of portions that have any desired size and/or irradiation time. For example, a first region 202 and a second region 204 of an object element 200 may have a relative surface area of from 1:1 to 1:100, such as from 1:1 to 1:10, or such as from 1:1 to 1:2. As another example, a first region 202 and a second region 204 of an object element 200 may have a relative irradiation time of from 1:1 to 1:100, such as from 1:1 to 1:10, or such as from 1:1 to 1:2.

In some embodiments, an apportioned irradiation regime may include changes to the configuration and/or arrangement of the plurality of portions, such as the size, shape, or location of the first region 202 and/or second region 204. For example, the configuration and/or arrangement of the plurality of portions may be changed according to a sequence or pattern of object elements 200. Additionally, or in the alternative, the respective irradiation devices allocated to the plurality of portions, such as the first region 202 and the second region 204, of the object element 200 may be changed, including according to a sequence or pattern of object elements 200. A sequence or pattern of object elements 200 may include a first plurality of object elements 200 in which the first region 202 may have a first configuration and/or arrangement, and/or in which the first region 202 may be irradiated according to a first setpoint for one or more irradiation parameters. The sequence or pattern of object elements 200 may include a second plurality of object elements 200 in which the second region 204 may have a second configuration and/or arrangement, and/or in which the second region 204 may be irradiated according to a second setpoint for one or more irradiation parameters.

An apportioned irradiation regime may include changing a configuration and/or arrangement of a first region 202 and/or a second region 204 of the object elements 200, such as relative to one another, in a sequence or pattern of object elements 200. The first region 202 may have a first configuration and/or arrangement corresponding to a first part of a sequence or pattern of object elements 200. The first region 202 may have a second configuration and/or arrangement corresponding to a second part of the sequence or pattern of object elements 200. Additionally, or in the alternative, an apportioned irradiation regime may include irradiating a first region 202 and/or a second region 204 of the object elements 200 using a first energy beam 142 from a first irradiation device 138 for a first part of a sequence or pattern of object elements 200, and irradiating the first region 202 of the object element 200 using a second energy beam 148 from a second irradiation device 140 for a second part of the sequence or pattern of object elements 200. The apportioned regime may additionally or alternatively include irradiating the second region 204 of the object elements 200 using the second energy beam 148 from the second irradiation device 140 for the first part of the sequence or pattern of object elements 200, and irradiating the second region 204 of the object elements 200 using the first energy beam 142 from the first irradiation device 138 for the second part of the sequence or pattern of object elements 200.

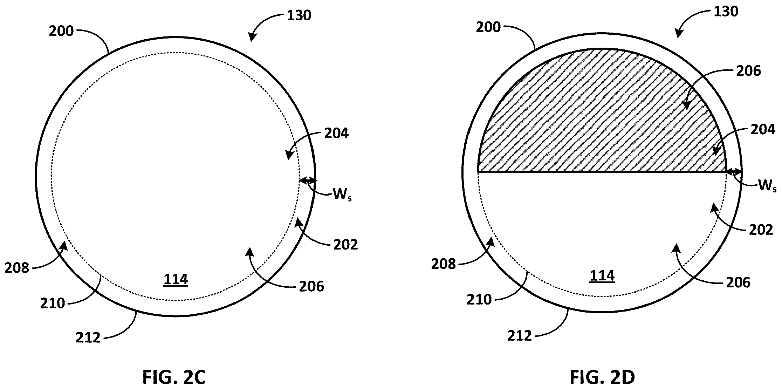

As shown in FIG. 2C, in some embodiments, an object element 200 may be irradiated according to a core-shell irradiation regime. With a core-shell irradiation regime, the object element 200 shown in FIG. 2C may be apportioned into a plurality of regions that include one or more core regions 206 and one or more shell regions 208. The one or more core regions 206 may be surrounded by the one or more shell regions 208. An overlap region 210 may define a boundary between, and/or a transition from, a core region 206 to a shell region 208. Respective ones of the one or more shell regions 208 may have a shell perimeter 212 that defines an outward surface and/or an inward surface of the portion of the additively manufactured three-dimensional object 114 corresponding to the object element 200. In some embodiments, the shell region 208 may surround an entirety of the core region 206, for example, with the shell perimeter 212 defining a contiguous outward surface and/or a contiguous inward surface of the portion of the additively manufactured three-dimensional object 114 corresponding to the object element 200.

The core region 206 and the shell region 208 may be differentiated from one another at least in part by a setpoint for one or more irradiation parameters that may differ as between the core region 206 and the shell region 208, such as beam power, intensity, intensity profile, energy density, spot size, spot shape, scanning pattern, scanning speed, and so forth. For example, a shell region 208 of an object element 200 may be irradiated with a higher energy density than a core region 206 of an object element 200. The difference in power density corresponding to the core region 206 and the shell region 208 may be realized by one or more differing irradiation parameters, such as power, intensity, intensity profile, spot size, spot shape, scanning pattern, scanning speed, and so forth. Additionally, or in the alternative, a core region 206 and a shell region 208 may be differentiated from one another by one or more material properties that may differ as between the core region 206 and the shell region 208, for example, as a result of such differing setpoints for the one or more irradiation parameters. By way of example, the core region 206 and the shell region 208 may differ in respect of porosity and/or density. In some embodiments, the porosity of the shell region 208 may be less than the porosity of the core region 206, and/or the density of the shell region 208 may be greater than the density of the core region 206.

The core region 206 and the shell region 208 may have any desired dimensions and/or may respectively occupy any desired proportion of the object element 200, such as relative to the one or more. In some embodiments, the shell region 208 of an object element 200 may have a cross-sectional width, Wₛ, of from about 1 micrometer (µm) to about 10 centimeters (cm), such as from about 1 µm to about 1 cm, such as from about 1 µm to about 1 mm, or such as from about 10 µm to about 100 µm. Additionally, or in the alternative, the cross-sectional width of the shell region 208, Ws, may be described in proportion to a cross-sectional width of the object element 200. In some embodiments, the cross-sectional width of the shell region 208, Ws, may be from 0.0001% to 50% of the cross-sectional width of the object element 200, such as from 0.001% to 25%, such as from 0.01% to 10%, such as from 0.0001% to 1%, or such as from 0.0001% to 0.1% of the cross-sectional width of the object element 200. For embodiments where the shell region 208 and/or the core region 206 has a varying cross sectional width, maximum cross-sectional width values may be used, or a minimum cross-sectional width values may be used.

As shown in FIG. 2C, the core region 206 and the shell region 208 of an object element 200 may be irradiated using one or more irradiation devices 138, 140. In some embodiments, the core region 206 and the shell region 208 of an object element 200 may be irradiated using one irradiation device 138, such as using the same energy beam 142 from the same irradiation device 138. Additionally, or in the alternative, the core region 206 and the shell region 208 may be irradiated using different irradiation devices, such as according to a core-shell apportioned irradiation regime.

As shown in FIG. 2D, in some embodiments, an object element 200 may be irradiated according to a core-shell apportioned irradiation regime. With a core-shell apportioned irradiation regime, the object element 200 shown in FIG. 2D may be irradiated using a plurality of irradiation devices 138, 140 respectively allocated to irradiate the core region 206 and the shell region 208 the object element 200. For example, the core region 206 may be irradiated by a first irradiation device 138 and the shell region 208 may be irradiated by a second irradiation device 140. In some embodiments, the core region 206 and the shell region 208 may be differentiated from one another at least in part by different irradiation devices respectively used to irradiate the core region 206 and the shell region 208 of the object element 200.

One or more of a plurality of irradiation devices 138, 140 may be respectively allocated to irradiate a corresponding portion of the core region 206 of the object element 200. All or a portion of the core region 206 may be apportioned to an irradiation device 138. For example, as shown in FIG. 2D, the core region 206 may be apportioned between a first region 202 and a second region 204. The first region 202 may be irradiated by a first irradiation device 138 and the second region 204 may be irradiated by a second irradiation device. Additionally, or in the alternative, as shown in FIG. 2D, the first region 202 may include the shell region 208 and a portion of the core region 206. The second region 204 may include a portion of the core region 206 surrounded by the shell region 208 and/or the first region 202. In some embodiments, the shell region 208 and/or the first region 202 may surround an entirety of the core region 206, for example, providing a shell perimeter 212 that has a contiguous outward surface and/or a contiguous inward surface of the portion of the additively manufactured three-dimensional object 114 corresponding to the object element 200.

Referring now to FIGs. 3A-3C, in some embodiments, an object element 200 may be apportioned between a core region 206 and a shell region 208 in varying proportions, for example, based at least in part on surface area and/or irradiation time. As shown in FIG. 3A, the core region 206 and the shell region 208 may be apportioned substantially balanced relative to one another, for example, based at least in part on surface area and/or irradiation time. As shown in FIG. 3B, apportionment of the core region 206 and the shell region 208 may be weighted towards the core region 206, for example, such that the surface area and/or irradiation time of the core region 206 exceeds that of the shell region 208. As shown in FIG. 3C, apportionment of the core region 206 and the shell region 208 may be weighted towards the shell region 208, for example, such that the surface area and/or irradiation time of the shell region 208 exceeds that of the core region 206.

In some embodiments, the apportionment of the object element 200 as between the core region 206 and the shell region 208 may be determined based at least in part on a core-shell apportionment factor 214. The core-shell apportionment factor 214 may have a range, such as with a maximum and/or minimum apportionment to the core region 206 and/or to the shell region 208 of the object element 200. A setpoint for the core-shell apportionment factor 214 may be determined based at least in part on surface area and/or irradiation time. For example, a setpoint for the core-shell apportionment factor 214 may be determined at least in part to provide a relative surface area and/or a relative irradiation time as between the first region 202 and the second region 204, and/or as between the core region 206 and the shell region 208. A setpoint for the core-shell apportionment factor 214 may be determined based at least in part on an ordered, random, or semi-random sequence or pattern. In some embodiments, the core-shell apportionment factor 214 may differ as between respective ones of a plurality of object elements 200 that form an additively manufactured three-dimensional object 114. For example, the core-shell apportionment factor 214 may be varied according to an ordered, random, or semi-random sequence or pattern with respect to at least some of the object elements 200.

The shell region 208 may have any desired thickness. The shell region 208 may have a minimum thickness limited by the width of a single beam path. The shell region 208 may have a maximum thickness limited by the dimensions of the three-dimensional object 114 and an apportionment between the core region 206 and the shell region 208. In some embodiments, the shell region 208 may have a thickness corresponding to a width of from 1 beam path to 100 beam paths, such as from 1 beam path to 50 beam paths, such as from 1 beam path to 10 beam paths, such as from 5 beam paths to 25 beam paths. In some embodiments, the shell region 208 may have a thickness of from about 10 micrometers (µm) to about 10 centimeters (cm), such as from about 10 µm to about 10 millimeters (mm), such as from about 10 µm to about 1 mm, such as from about 10 µm to about 500 µm, such as from about 10 µm to about 100 µm, such as from about 50 µm to about 250 µm, such as from about 250 µm to about 750 µm, such as from about 500 µm to about 5 mm.

Referring now to FIGs. 4A-4C, in some embodiments, a core region 206 of an object element 200 may be apportioned between a first region 202 and a second region 204 in varying proportions, for example, based at least in part on a surface area and/or an irradiation time for the respective object element 200, such as a surface area and/or an irradiation time of the core region 206 and/or the shell region 208. As shown in FIG. 4A, the core region 206 may be apportioned substantially balanced between the first region 202 and the second region 204. As shown in FIG. 4B, apportionment of the core region 206 may be weighted towards the second region 204. As shown in FIG. 4C, apportionment of the core region 206 may be weighted towards the first region 202. The apportionment of the core region 206 between the first region 202 and the second region 204 shown in FIGs. 4A-4C may represent apportionment based at least in part on a surface area and/or an irradiation time for the respective object element 200, such as a surface area and/or an irradiation time of the core region 206 and/or the shell region 208.

In some embodiments, the apportionment of the core region 206 between the first region 202 and the second region 204 may be determined based at least in part on a core region apportionment factor 216. The core region apportionment factor 216 may have a range, such as with a maximum and/or minimum apportionment to the first region 202 and/or to the second region 204 of the core region 206. A setpoint for the core region apportionment factor 216 may be determined based at least in part on a surface area and/or an irradiation time for the respective object element 200, such as a surface area and/or an irradiation time of the core region 206 and/or the shell region 208. For example, a setpoint for the core region apportionment factor 216 may be determined at least in part to provide a relative surface area and/or a relative irradiation time as between the first region 202 and the second region 204, and/or as between the core region 206 and the shell region 208. A setpoint for the core region apportionment factor 216 may be determined based at least in part on to an ordered, random, or semi-random sequence or pattern. In some embodiments, the core region apportionment factor 216 may differ as between respective ones of a plurality of object elements 200 that form an additively manufactured three-dimensional object 114. For example, the core region apportionment factor 216 may be varied according to an ordered, random, or semi-random sequence or pattern with respect to at least some of the object elements 200.

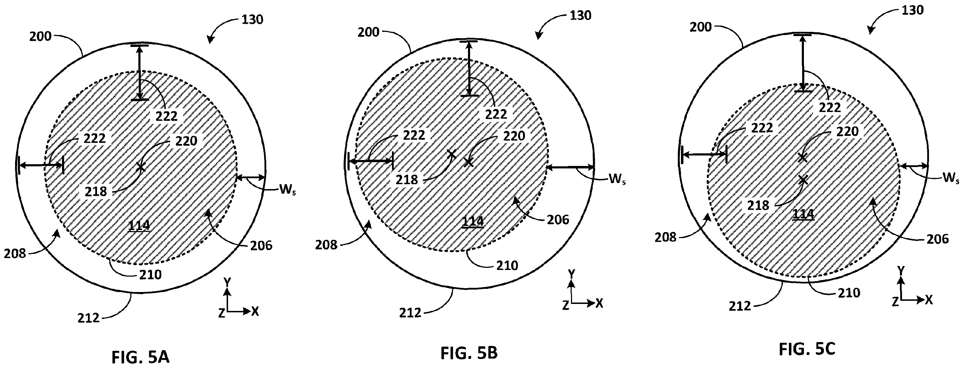

Referring now to FIGs. 5A-5C, in some embodiments, a core region 206 of an object element 200 and a shell region 208 of an object element 200 may be aligned or offset from one another. For example a core region centroid 218 and a shell region centroid 220 may be aligned with one another or offset from one another. As shown in FIG. 5A, a core region centroid 218 of the core region 206 may be substantially aligned with a shell region centroid 220 of the shell region 208. As shown in FIGs. 5A and 5B, a core region centroid 218 and a shell region centroid 220 may be offset from one another. The core region centroid 218 and the shell region centroid 220 may be offset in any direction, such as in accordance with a coordinate system. By way of example, as shown in FIG. 5B, the core region centroid 218 is offset to the left on the x-axis and upwards on the y-axis, and as shown in FIG. 5C, the core region centroid 218 is offset downwards on the y-axis.

In some embodiments, an alignment and/or offset between the core region 206 and the shell region 208, such as between the core region centroid 218 and the shell region centroid 220, may be determined based at least in part on a core region offset factor 222. The core region offset factor 222 may have a range, such as with a maximum and/or minimum offset. The core region offset factor 222 may have an x-axis component and/or a y-axis component. A setpoint for the core region offset factor 222 may be determined based at least in part on an ordered, random, or semi-random sequence or pattern. In some embodiments, the core region offset factor 222 may differ as between respective ones of a plurality of object elements 200 that form an additively manufactured three-dimensional object 114. For example, the core region offset factor 222 may be varied according to an ordered, random, or semi-random sequence or pattern with respect to at least some of the object elements 200.

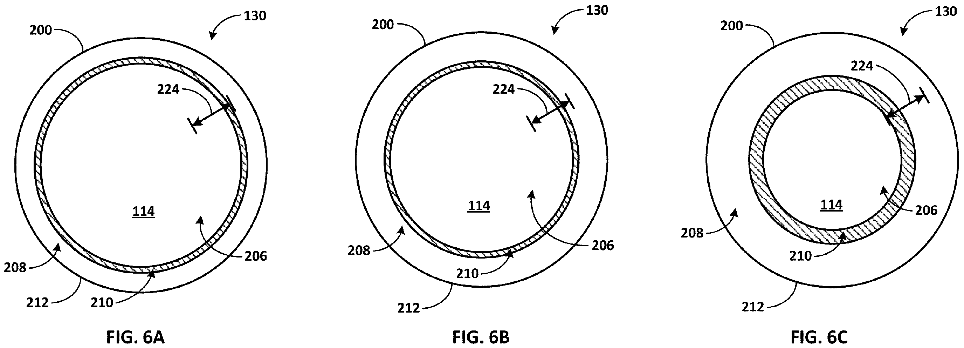

Referring now to FIGs. 6A-6C, in some embodiments, an object element 200 may include an overlap region 210 defining a boundary between, and/or a transition from, a core region 206 to a shell region 208. A location and/or a cross-sectional width of an overlap region may vary, for example, based at least in part on a surface area and/or an irradiation time for the respective object element 200, such as a surface area and/or an irradiation time of the core region 206 and/or the shell region 208. As shown in FIGs. 6A and 6B, a location of the overlap region 210 may vary. As shown in FIG. 6C, a cross-sectional width of the overlap region 210 may vary.

In some embodiments, the location and/or the cross-sectional width of an overlap region 210 may be determined based at least in part on an interlace factor 224. The interlace factor 224 may have a range, such as with a maximum and/or minimum amount of interlacing or overlap between the core region 206 and the shell region 208 of the object element 200. A setpoint for the interlace factor 224 may be determined based at least in part on a surface area and/or an irradiation time for the respective object element 200, such as a surface area and/or an irradiation time of the core region 206 and/or the shell region 208. For example, a setpoint for the interlace factor 224 may be determined at least in part to provide a relative surface area and/or a relative irradiation time as between the first region 202 and the second region 204, and/or as between the core region 206 and the shell region 208. A setpoint for the interlace factor 224 may be determined based according to an ordered, random, or semi-random sequence or pattern. In some embodiments, the interlace factor 224 may differ as between respective ones of a plurality of object elements 200 that form an additively manufactured three-dimensional object 114. For example, the interlace factor 224 may be varied according to an ordered, random, or semi-random sequence or pattern with respect to at least some of the object elements 200.

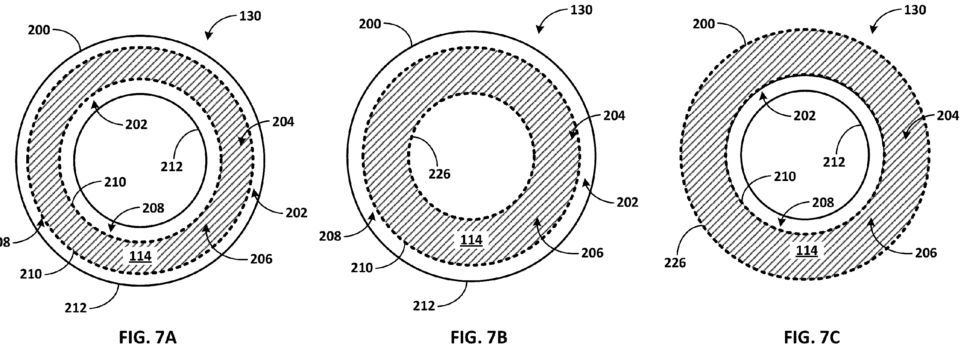

Now referring to FIGs. 7A-7C, in some embodiments, a shell region 208 may surround an outward perimeter portion of a core region 206 and/or an inward perimeter portion of a core region 206. As shown in FIG. 7A, a first or outward shell region 208 may surround an outward perimeter portion of a core region 206 and a second or inward shell region 208 may surround an inward perimeter portion of the core region 206. An outward shell perimeter 212 of the outward shell region 208 may define an outward surface of the portion of the additively manufactured three-dimensional object 114 corresponding to the object element 200. An inward shell perimeter 212 may define an inward surface of the portion of the additively manufactured three-dimensional object 114 corresponding to the object element 200. As shown in FIG. 7B, an outward shell region 208 may surround an outward perimeter portion of a core region 206. An inward core perimeter 226 of the core region 206 may define an inward surface of the portion of the additively manufactured three-dimensional object 114 corresponding to the object element 200. As shown in FIG. 7C, an inward shell region 208 may surround an inward perimeter portion of a core region 206. An outward core perimeter 226 of the core region 206 may define an outward surface of the portion of the additively manufactured three-dimensional object 114 corresponding to the object element 200.

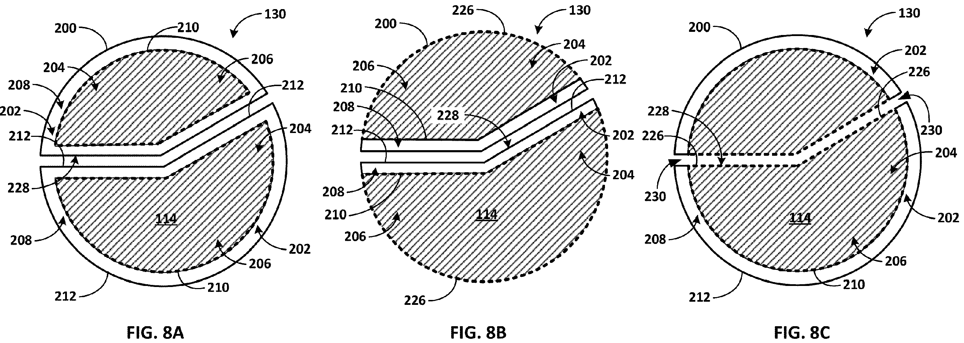

Referring now to FIGs. 8A-8C, in some embodiments, an object element 200 may define a portion of a pathway 228 through an additively manufactured three-dimensional object 114. The pathway 228 may pass through a portion of the core region 206 and/or a portion of the shell region 208 of the object element 200. As shown in FIG. 8A, the shell region 208 may surround an outward portion of the core region 206 and an inward portion of the core region 206. At least a portion of the shell region 208 may define at least part of the pathway 228 defined by the object element 200. The portion of the shell region 208 surrounding the inward portion of the core region 206 may define at least a portion of the pathway 228. An inward shell perimeter 212 of the shell region 208 may define a surface of the part of the pathway 228 corresponding to the object element 200. As shown in FIG. 8B, in some embodiments, an outward core perimeter 226 of the core region 206 may define an outward surface of the portion of the additively manufactured three-dimensional object 114 corresponding to the object element 200. An inward shell region 208 of the object element 200 may surround an inward perimeter portion of a core region 206, defining at least a portion of the pathway 228. As shown in FIG. 8C, at least a portion of the core region 206 may define at least part of the pathway 228 defined by the object element 200. An inward core perimeter 226 of the core region 206 may define a surface of the part of the pathway 228 corresponding to the object element 200. An inward shell region 208 of the object element 200 may also define at least a portion of the pathway 228. An outward shell perimeter 212 of the shell region 208 may define an outward surface of the portion of the additively manufactured three-dimensional object 114 corresponding to the object element 200. The shell region 208 may include one or more disjunctions 230 respectively corresponding to a location where the pathway 228 traverses the shell region 208.

In some embodiments, an object element 200 may have substantially balanced surface area and/or irradiation time as between a core region 206 and a shell region 208. A core region 206 and a shell region 208 may have substantially balanced surface areas and/or irradiation times when an absolute difference in surface area and/or irradiation time falls within a specified range. The specified range may be defined by an absolute difference in surface area and/or irradiation time between the core region 206 and the shell region 208, such as an absolute difference of 10% or less, such as 5% or less, such as 1% or less, or such as an absolute difference of 0.1% or less.

In some embodiments, one or more dimensions of a core region 206 and/or a shell region 208 of an object element 200 may be determined at least in part to provide substantially balanced surface areas and/or irradiation times as between the core region 206 and the shell region 208. For example, a core-shell apportionment factor 214, a core region apportionment factor 216, a core region offset factor 222, and/or an interlace factor 224 may be determined for an object element 200 at least in part to provide substantially balanced aggregate surface areas and/or aggregate irradiation times as between the core region 206 the shell region 208 of the object element 200.

Now turning to FIGs. 9A-9D, exemplary irradiation regimes for layers of a build plane 130 that includes a plurality of object elements 200 will be described. FIGs. 9A-9D show a build plane 130 with a plurality of object elements 200 respectively corresponding to a portion of a plurality of additively manufactured three-dimensional objects 114. Respective ones of the plurality of object elements 200 may be irradiated using any one or more irradiation regimes described herein, including the irradiation regimes described with reference to FIGs. 2A-2D, FIGs. 3A-3C, FIGs. 4A-4C, FIGs. 5A-5C, FIGs. 6A-6C, FIGs. 7A-7C, and/or FIGs. 8A-8C, as well as combinations thereof. For example, respective ones of the plurality of object elements 200 may be irradiated using a core-shell irradiation regime and/or a core-shell apportioned irradiation regime. At least some of the object elements 200 may be disposed at least partially within a first build plane region 146. Additionally, or in the alternative, at least some of the object elements 200 may be disposed at least partially within a second build plane region 152. At least some of the object elements 200 disposed at least partially within the first build plane region 146, and/or at least partially within the second build plane region 152, may be disposed within an interlace region 154.

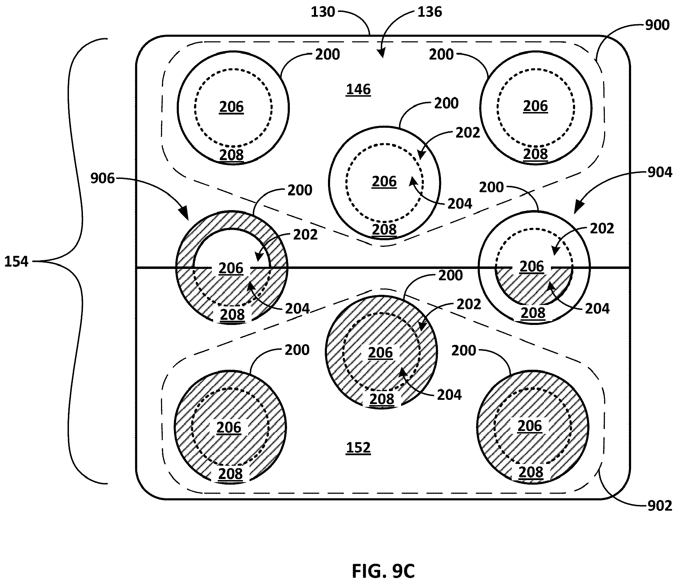

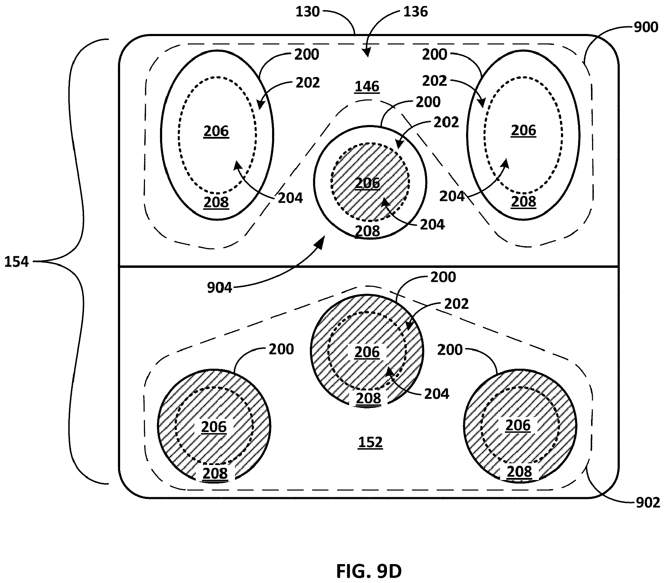

At least some of the object elements 200 may be irradiated by a first irradiation device 138. Additionally, or in the alternative, at least some of the object elements 200 may be irradiated by a second irradiation device 140. For example, as shown in FIGs. 9A, 9C, and 9D, a first object element group 900 may be irradiated by a first irradiation device 138, and/or a second object element group 902 may be irradiated by a second irradiation device 140. As shown in FIG. 9A, a plurality of object elements 200 disposed within the first build plane region 146 may be allocated to the first object element group 900 and may be irradiated by the first irradiation device 138. Additionally, or in the alternative, a plurality of object elements 200 disposed within the second build plane region 152 may be allocated to the second object element group 902 and may be irradiated by the second irradiation device 140. In some embodiments, as shown, for example, in FIG. 9A, one or more object elements 200 that overlap the first build plane region 146 and the second build plane region 152 may be allocated respectively to the first object element group 900 and/or to the second object element group 902. In some embodiments, the object elements 200 allocated to the first object element group 900 may be irradiated with the first irradiation device 138 using a core-shell irradiation regime. Additionally, or in the alternative, the object elements 200 allocated to the second object element group 902 may be irradiated with the second irradiation device 140 using a core-shell irradiation regime.

In some embodiments, the plurality of object elements 200 may be allocated to respective object element groups 900, 902 and irradiated by respective ones of a plurality of irradiation devices 138, 140, such as the first irradiation device 138 and the second irradiation device 140, based at least in part on an aggregate surface area and/or an aggregate irradiation time of the respective object element groups 900, 902. For example, the first object element group 900 may include a first plurality of object elements 200, and the second object element group 902 may include a second plurality of object elements 200, and the first object element group 900 and the second object element group 902 may have a substantially balanced aggregate surface area and/or a substantially balanced irradiation time.

As used herein, object element groups 900, 902 may have substantially balanced aggregate surface areas and/or irradiation times when an absolute difference in aggregate surface area and/or aggregate irradiation time between the object element groups 900, 902 falls within a specified range. The specified range may be defined by an absolute difference in aggregate surface area and/or aggregate irradiation time between the object element groups 900, 902, such as an absolute difference of 10% or less, such as 5% or less, such as 1% or less, or such as an absolute difference of 0.1% or less. Additionally, or in the alternative, a plurality of object element groups 900, 902 may have substantially balanced aggregate surface areas and/or irradiation times when an absolute difference in aggregate surface area and/or aggregate irradiation time cannot be decreased by allocating one or more object elements 200 to a different object element group 900, 902. For example, a first object element group 900 and a second object element group 902 may have substantially balanced aggregate surface areas and/or aggregate irradiation times when an absolute difference in aggregate surface area and/or aggregate irradiation time between the first object element group 900 and the second object element group 902 cannot be decreased by changing an allocation of one or more of the object elements 200 from the first object element group 900 to the second object element group 902 and/or from the second object element group 902 to the first object element group 900.

In some embodiments, one or more dimensions of a core region 206 and/or a shell region 208 of the object elements 200 allocated to respective object element groups 900, 902 may be determined at least in part to provide substantially balanced aggregate surface areas and/or aggregate irradiation times as between the respective object element groups 900, 902. For example, a core-shell apportionment factor 214, a core region apportionment factor 216, a core region offset factor 222, and/or an interlace factor 224 may be determined for one or more object elements 200, such as for one or more object elements 200 in the first object element group 900 and/or for one or more object elements 200 in the second object element group 902. The core-shell apportionment factor 214, the core region apportionment factor 216, the core region offset factor 222, and/or the interlace factor 224 may be determined for the one or more object elements 200 at least in part to provide substantially balanced aggregate surface areas and/or aggregate irradiation times as between the respective object element groups 900, 902.

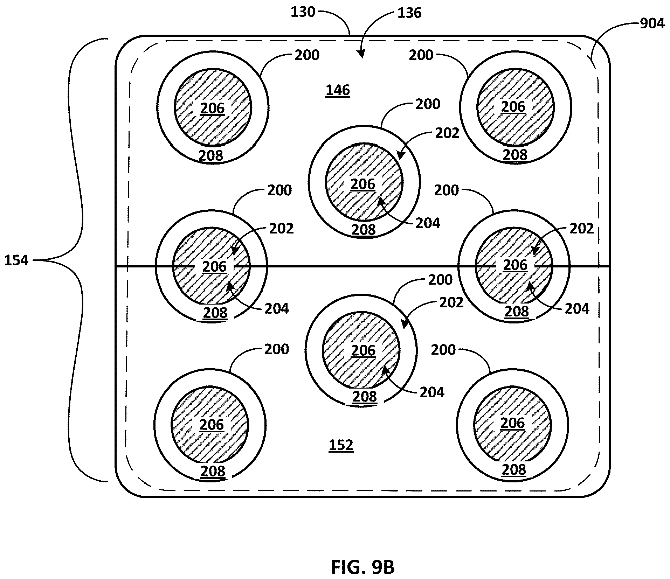

As shown in FIGs. 9B-9D, one or more object elements 200 may be irradiated using a core-shell apportioned irradiation regime. The one or more object elements 200 may be irradiated with the first irradiation device 138 and the second irradiation device 140 using a core-shell apportioned irradiation regime. For example, one or more object elements 200 may be allocated to a third object element group 904. In some embodiments, object elements 200 located within the first build plane region 146 may be irradiated using the first irradiation device 138 for the shell region 208 and the second irradiation device 140 for the core region 206. Additionally, or in the alternative, object elements 200 located within the second build plane region 152 may be irradiated using the second irradiation device 140 for the shell region 208 and the first irradiation device 138 for the core region 206. Additionally, or in the alternative, object elements 200 located within the interlace region 154 may be irradiated using the first irradiation device 138 for the shell region 208 and the second irradiation device 140 for the core region 206, or vice versa.

In some embodiments, as shown in FIGs. 9C and 9D, the core region 206 of the object elements 200 may be apportioned between the first irradiation device 138 and the second irradiation device 140. For example, as shown, the core region 206 of the one or more object elements 200 in the third object element group 904 may be apportioned between the first irradiation device 138 and the second irradiation device 140, with the shell region 208 allocated to the first irradiation device 138. Additionally, or in the alternative, as shown in FIG. 9C, one or more object elements 200 may be allocated to a fourth object element group 906. The one or more object elements 200 in the fourth object element group 906 may be irradiated with the first irradiation device 138 using a core-shell apportioned irradiation regime. The shell region 208 of the one or more object elements 200 in the fourth object element group 906 may be irradiated using the second irradiation device 140. The core region 206 of the one or more object elements 200 in the fourth object element group 906 may be apportioned between the first irradiation device 138 and the second irradiation device 140. In some embodiments, the core region 206 of the object elements 200 may be apportioned between the first irradiation device 138 and the second irradiation device 140 when the object element 200 overlaps the first build plane region 146 and the second build plane region 152.

In some embodiments, as shown in FIGs. 9D, a plurality of object elements 200 disposed within the first build plane region 146 may be allocated to the first object element group 900 and may be irradiated by the first irradiation device 138, for example, using a core-shell irradiation regime, and a plurality of object elements 200 disposed within the second build plane region 152 may be allocated to the second object element group 902 and may be irradiated by the second irradiation device 140, for example, using a core-shell irradiation regime. One or more objects may be allocated to a third object element group 904 and may be irradiated using a core-shell apportioned irradiation regime. The one or more objects allocated to the third object element group 904 and irradiated using the core-shell apportioned irradiation regime may be selected based at least in part to provide a substantially balanced aggregate surface area and/or a substantially balanced irradiation time, for example, as between the first object element group 900 and the second object element group 902, and/or as between the first irradiation device 138 and the second irradiation device 140.

The one or more object elements 200 allocated to the third object element group that are disposed within the first build plane region 146 may be irradiated using the same irradiation device for the shell region 208 as used to irradiate the object elements 200 allocated to the first object element group 900 and disposed within the first build plane region 146. For example, the first irradiation device 138 may be used to irradiate the shell region 208 of the or more object elements 200 allocated to the third object element group and disposed within the first build plane region 146. The same irradiation device used to irradiate the object elements 200 allocated to the second object element group 902 may be used to irradiate the core region 206 of the one or more object elements 200 allocated to the third object element group and disposed within the first build plane region 146. For example, the second irradiation device 140 may be used to irradiate the core region 206 of the or more object elements 200 allocated to the third object element group and disposed within the first build plane region 146.

In some embodiments, the aggregate surface area of the object elements 200 allocated to the first object element group 900 may be substantially balanced with, such as equal to, the aggregate surface area of the object elements 200 allocated to the second object element group 902. Additionally, or in the alternative, the aggregate irradiation time for the object elements 200 allocated to the first object element group 900 may be substantially balanced with, such as equal to, the aggregate irradiation time for the object elements 200 allocated to the second object element group 902. In some embodiments, the aggregate surface area of the object elements 200 allocated to the first irradiation device 138 may be substantially balanced with, such as equal to, the aggregate surface area of the object elements 200 allocated to the second irradiation device 140. Additionally, or in the alternative, the aggregate irradiation time for the object elements 200 allocated to the first irradiation device 138 may be substantially balanced with, such as equal to, the aggregate irradiation time for the object elements 200 allocated to the second irradiation device 140.

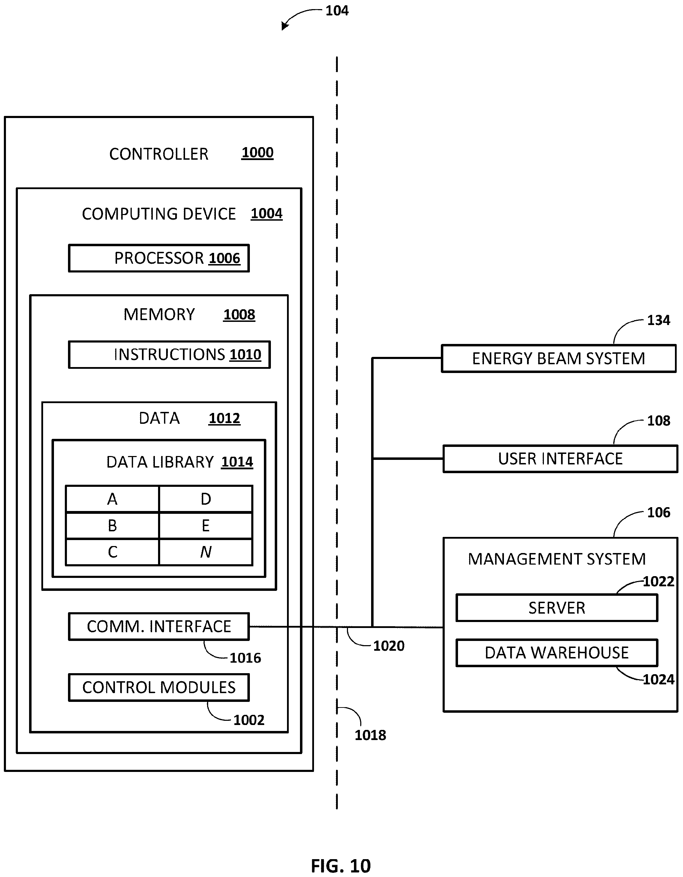

Now turning to FIG. 10, an exemplary control system for an additive manufacturing machine 102 or additive manufacturing system 100 will be described. A control system 104 may be configured to perform one or more control operations. A control system 104 may be configured to output one or more control commands associated with an additive manufacturing machine 102. The control commands may be configured to control one or more controllable components of an additive manufacturing machine 102.

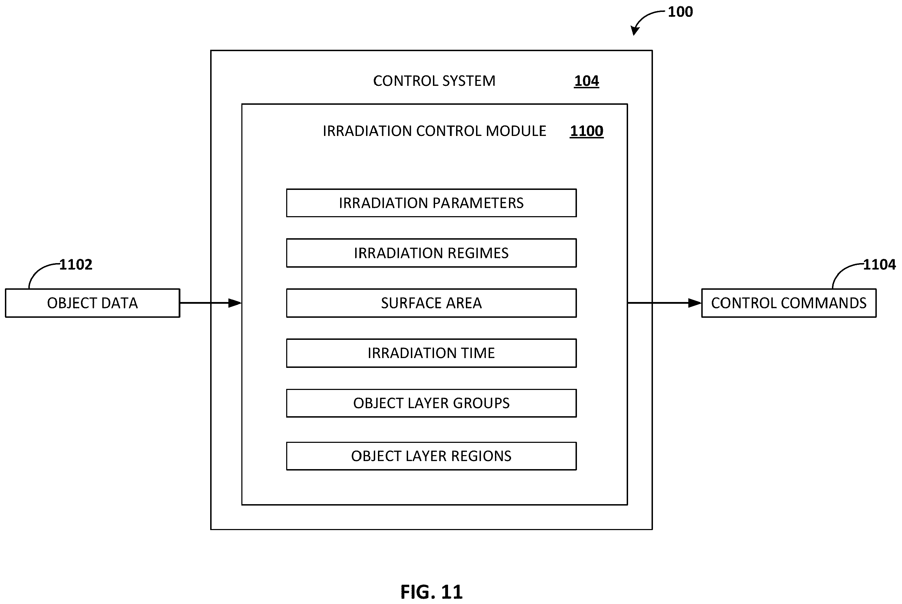

As shown in FIG. 10, an exemplary control system 104 includes a controller 1000. The controller may include one or more control modules 1002 configured to cause the controller 1000 to perform one or more control operations. For example, the one or more control modules 1002 may include an irradiation control module 1100 as described herein with reference to FIG. 11. The one or more control modules 1002 may include control logic executable to determine one or more operating parameters for an additive manufacturing machine 102, such as setpoints for one or more irradiation parameters, including, by way of example, power, intensity, intensity profile, power density, spot size, spot shape, scanning pattern, scanning speed, and so forth. Additionally, or in the alternative, the one or more control modules 1002 may include control logic executable to provide control commands configured to control one or more controllable components associated with an additive manufacturing machine 102, such as controllable components associated with an energy beam system 134 and/or a monitoring system 162. For example, a control module 1002 may be configured to provide one or more control commands based at least in part on one or more setpoints for one or more irradiation parameters.

The controller 1000 may be communicatively coupled with an additive manufacturing machine 102. In some embodiments, the controller 1000 may be communicatively coupled with one or more components of an additive manufacturing machine 102, such as one or more components of an energy beam system 134, and/or a monitoring system 162. The controller 1000 may also be communicatively coupled with a management system 106 and/or a user interface 108.

The controller 1000 may include one or more computing devices 1004, which may be located locally or remotely relative to the additive manufacturing machine 102 and/or the monitoring system 162. The one or more computing devices 1004 may include one or more processors 1006 and one or more memory devices 1008. The one or more processors 1006 may include any suitable processing device, such as a microprocessor, microcontroller, integrated circuit, logic device, and/or other suitable processing device. The one or more memory devices 1008 may include one or more computer-readable media, including but not limited to non-transitory computer-readable media, RAM, ROM, hard drives, flash drives, and/or other memory devices 1008.

The one or more memory devices 1008 may store information accessible by the one or more processors 1006, including computer-executable instructions 1010 that can be executed by the one or more processors 1006. The instructions 1010 may include any set of instructions which when executed by the one or more processors 1006 cause the one or more processors 1006 to perform operations, including optical element monitoring operations, maintenance operations, cleaning operations, calibration operations, and/or additive manufacturing operations.

The memory devices 1008 may store data 1012 accessible by the one or more processors 1006. The data 1012 can include current or real-time data 1012, past data 1012, or a combination thereof. The data 1012 may be stored in a data library 1014. As examples, the data 1012 may include data 1012 associated with or generated by an additive manufacturing system 100 and/or an additive manufacturing machine 102, including data 1012 associated with or generated by the controller 1000, an additive manufacturing machine 102, an energy beam system 134, a monitoring system 162, a management system 106, a user interface 108, and/or a computing device 1004. Such data 1012 may pertain to operation of an energy beam system 134 and/or a monitoring system 162. The data 1012 may also include other data sets, parameters, outputs, information, associated with an additive manufacturing system 100 and/or an additive manufacturing machine 102.

The one or more computing devices 1004 may also include a communication interface 1016, which may be used for communications with a communication network 1018 via wired or wireless communication lines 1020. The communication interface 1016 may include any suitable components for interfacing with one or more network(s), including for example, transmitters, receivers, ports, controllers, antennas, and/or other suitable components. The communication interface 1016 may allow the computing device 1004 to communicate with various nodes on the communication network 1018, such as nodes associated with the additive manufacturing machine 102, the energy beam system 134, the monitoring system 162, the management system 106, and/or a user interface 108. The communication network 1018 may include, for example, a local area network (LAN), a wide area network (WAN), SATCOM network, VHF network, a HF network, a Wi-Fi network, a WiMAX network, a gatelink network, and/or any other suitable communication network 1018 for transmitting messages to and/or from the controller 1000 across the communication lines 1020. The communication lines 1020 of communication network 1018 may include a data bus or a combination of wired and/or wireless communication links.

The communication interface 1016 may allow the computing device 1004 to communicate with various components of an additive manufacturing system 100 and/or an additive manufacturing machine 102 communicatively coupled with the communication interface 1016 and/or communicatively coupled with one another, including an energy beam system 134 and/or a monitoring system 162. The communication interface 1016 may additionally or alternatively allow the computing device 1004 to communicate with the management system 106 and/or the user interface 108. The management system 106 may include a server 1022 and/or a data warehouse 1024. As an example, at least a portion of the data 1012 may be stored in the data warehouse 1024, and the server 1022 may be configured to transmit data 1012 from the data warehouse 1024 to the computing device 1004, and/or to receive data 1012 from the computing device 1004 and to store the received data 1012 in the data warehouse 1024 for further purposes. The server 1022 and/or the data warehouse 1024 may be implemented as part of a control system 104 and/or as part of the management system 106.

Referring now to FIG. 11, an exemplary irradiation control module 1100 will be described. An irradiation control module 1100 may be included as part of a control system 104 and/or controller 1000 for an additive manufacturing machine 102. Additionally, or in the alternative, an irradiation control module 1100 may be provided separately from the control system 104, such as with a separate controller 1000 and/or a separate computing device 1004 communicatively coupled with the control system 104 and/or additive manufacturing machine 102. As shown, an irradiation control module 1100 may receive object data 1102. The object data 1102 may include data 1012 pertaining to one or more objects 114 to be additively manufactured with an additive manufacturing machine 102 associated with the irradiation control module 1100. For example, the object data 1102 may include data 1012 pertaining to object elements 200 and/or locations of object elements 200 on a build plane 130. The irradiation control module 1100 may be configured to determine one or more control commands 1104 based at least in part on the object data 1102.

An irradiation control module 1100 may be configured to determine one or more irradiation parameters, such as beam power, intensity, intensity profile, energy density, spot size, spot shape, scanning pattern, scanning speed, and so forth. The one or more irradiation parameters may be determined based at least in part on the object data 1102. An irradiation control module 1100 may be configured to determine one or more irradiation regimes corresponding to respective object elements 200, such as a singular irradiation regime, an apportioned irradiation regime, a core-shell irradiation regime, and/or a core-shell apportioned irradiation regime. The one or more irradiation regimes may be determined based at least in part on the object data 1102. One or more irradiation parameters may be determined based at least in part on the one or more irradiation regimes. Additionally, or in the alternative, one or more irradiation regimes may be determined based at least in part on the irradiation parameters.

An irradiation control module 1100 may be configured to determine a surface area and/or an irradiation time of one or more object elements 200. Additionally, or in the alternative, an irradiation control module 1100 may be configured to determine one or more object element groups 900, 902, and/or to allocate one or more object elements 200 to respective object element groups 900, 902, for example, based at least in part on the surface area and/or the irradiation time of the one or more object elements 200. In some embodiments, the irradiation control module may be configured to substantially balance an aggregate surface area and/or an aggregate irradiation time as between one or more object element groups 900, 902. Additionally, or in the alternative, the irradiation control module may be configured to substantially balance an aggregate surface area and/or an aggregate irradiation time as between a core region 206 and a shell region 208 of one or more object element groups 900, 902.

The irradiation control module 1100 may be configured to determine a surface area and/or an irradiation time for one or more object elements 200. Additionally, or in the alternative, the irradiation control module may be configured to determine balanced aggregate surface areas and/or aggregate irradiation times as between the respective object element groups 900, 902. The irradiation control module 1100 may be configured to determine one or more regions of respective object elements 200, such as one or more core regions 206, shell regions 208, and/or overlap regions 210. Additionally, or in the alternative, the irradiation control module 1100 may be configured to determine a surface area and/or an irradiation time for one or more regions of respective object elements 200. The irradiation control module 1100 may be configured to determine balanced aggregate surface areas and/or aggregate irradiation times as between the regions of a respective object elements 200, for example, as between a core region 206 and a shell region 208 of a respective object element 200. The control commands 1104 determined by the irradiation control module 1100 may be determined based at least in part on any one or more such operations of the irradiation control module 1100.

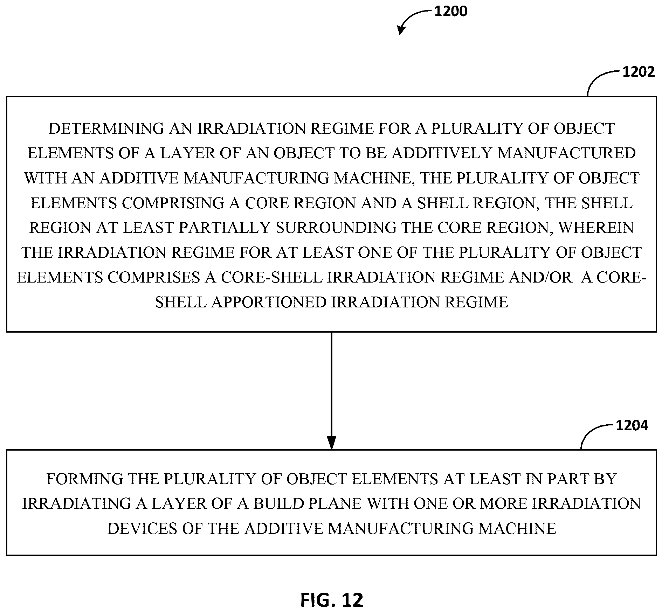

Now turning to FIG. 12, exemplary methods of additively manufacturing three-dimensional objects will be described. As shown, an exemplary method 1200 may include, at block 1202, determining an irradiation regime for a plurality of object elements 200 of a layer of an object 114 to be additively manufactured with an additive manufacturing machine 102. At least some of the plurality of object elements 200 may include a core region 206 and a shell region 208 at least partially surrounding the core region 206. The irradiation regime for at least one of the plurality of object elements 200 may include a core-shell irradiation regime. Additionally, or in the alternative, the irradiation regime for at least one of the plurality of object elements 200 may include a core-shell apportioned irradiation regime. An exemplary method 1200 may include, at block 1204, forming the plurality of object elements 200 at least in part by irradiating a layer of a build plane 130 with one or more irradiation devices 138, 140 of the additive manufacturing machine 102.

Further aspects of the invention are provided by the subject matter of the following clauses:
1. A method of additively manufacturing a three-dimensional object, the method comprising: determining an irradiation regime for a plurality of object elements of a layer of an object to be additively manufactured with an additive manufacturing machine, the plurality of object elements comprising a core region and a shell region, the shell region at least partially surrounding the core region; and forming the plurality of object elements at least in part by irradiating a layer of a build plane with one or more irradiation devices of the additive manufacturing machine; wherein the irradiation regime for at least one of the plurality of object elements comprises a core-shell irradiation regime and/or wherein the irradiation regime for at least one of the plurality of object elements comprises a core-shell apportioned irradiation regime.
2. The method of any preceding clause, comprising: irradiating the core region with a first energy beam emitted from a first irradiation device; and irradiating the shell region with a second energy beam from a second irradiation device.
3. The method of any preceding clause, comprising: irradiating the core region with an irradiation parameter being at a first setpoint; and irradiating the shell region with the irradiation parameter being at a second setpoint, the second setpoint differing from the first setpoint.
4. The method of any preceding clause, wherein the irradiation parameter comprises beam power, intensity, intensity profile, power density, spot size, spot shape, scanning pattern, and/or scanning speed.
5. The method of any preceding clause, comprising: allocating a first portion of the plurality of object elements to a first object element group; allocating a second portion of the plurality of object elements to a second object element group; forming the first portion of the plurality of object elements at least in part by irradiating the layer of the build plane with a first irradiation device; and forming the second portion of the plurality of object elements at least in part by irradiating the layer of the build plane with a second irradiation device; wherein the first object element group and the second object element group have a substantially balanced aggregate surface area and/or a substantially balanced irradiation time.
6. The method of any preceding clause, wherein an absolute difference in aggregate surface area and/or aggregate irradiation time cannot be decreased by allocating one or more object elements to a different object element group, the different object element group selected from the first object element group, the second object element group, and a third object element group.
7. The method of any preceding clause, comprising: determining one or more dimensions of the core region and/or the shell region of at least some of the plurality of object elements at least in part to provide substantially balanced aggregate surface areas and/or substantially balanced aggregate irradiation times as between the first object element group and the second object element group.
8. The method of any preceding clause, comprising: determining one or more dimensions of the core region and/or the shell region of at least some of the plurality of object elements at least in part to provide substantially balanced aggregate surface areas and/or substantially balanced aggregate irradiation times as between the core regions and the shell regions of the plurality of object elements.
9. The method of any preceding clause, comprising: apportioning at least some of the plurality of object elements between the core region and the shell region based at least in part on a setpoint for a core-shell apportionment factor, the setpoint for the core-shell apportionment factor determined based at least in part on a surface area and/or an irradiation time of the core region and/or the shell region of the respective object element.
10. The method of any preceding clause, comprising: apportioning the core region between a first irradiation device and a second irradiation device based at least in part on a setpoint for a core region apportionment factor, the setpoint for the core region apportionment factor determined based at least in part on a surface area and/or an irradiation time of core region and/or the shell region of the respective object element.
11. The method of any preceding clause, comprising: determining an alignment and/or an offset between a core region centroid and a shell region centroid based at least in part on an ordered, random, or semi-random sequence or pattern.
12. The method of any preceding clause, comprising: determining an overlap region defining a boundary between, and/or a transition from, the core region to the shell region based at least in part on surface area and/or irradiation time of the core region and/or the shell region of the respective object element.
13. The method of any preceding clause, wherein at least some of the plurality of object elements define at least a portion of a pathway passing through a portion of the core region and/or a portion of the shell region of the respective object element.
14. The method of any preceding clause, wherein the plurality of object element groups have substantially balanced aggregate surface areas and/or substantially balanced aggregate irradiation times.
15. The method of any preceding clause, wherein an absolute difference in aggregate surface area and/or aggregate irradiation time as between the plurality of object element groups falls within a specified range, the specified range being an absolute difference of 1% or less.
16. The method of any preceding clause, wherein the core region and the shell region have substantially balanced surface areas and/or substantially balanced irradiation times.
17. The method of any preceding clause, wherein an absolute difference in surface area and/or irradiation time between the core region and the shell region falls within a specified range, the specified range being an absolute difference of 1% or less.
18. The method of any preceding clause, wherein the shell region has a cross-sectional width of from 1 micrometer to 10 centimeters.
19. The method of any preceding clause, wherein the shell region has a maximum cross-sectional width of from 0.0001% to 50% of a maximum cross-sectional width of the object element.
20. A computer-readable medium comprising computer-executable instructions, which when executed by a processor associated with an additive manufacturing machine or system, causes the additive manufacturing machine or system to perform a method of additively manufacturing a three-dimensional object, the method comprising: determining an irradiation regime for a plurality of object elements of a layer of an object to be additively manufactured with an additive manufacturing machine, at least some of the plurality of object elements comprise a core region and a shell region at least partially surrounding the core region; and irradiating the plurality of object elements upon a build plane with one or more irradiation devices of the additive manufacturing machine; wherein the irradiation regime for at least one of the plurality of object elements comprises a core-shell irradiation regime and/or wherein the irradiation regime for at least one of the plurality of object elements comprises a core-shell apportioned irradiation regime.
21. The computer-readable medium of the preceding clause, comprising computer-executable instructions, which when executed by a processor associated with an additive manufacturing machine or system, causes the additive manufacturing machine or system to perform the method of any preceding clause.

This written description uses exemplary embodiments to describe the presently disclosed subject matter, including the best mode, and also to enable any person skilled in the art to practice such subject matter, including making and using any devices or systems and performing any incorporated methods. The patentable scope of the presently disclosed subject matter is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

## Claims

1. A method of additively manufacturing a three-dimensional object, the method comprising:
determining an irradiation regime for a plurality of object elements of a layer of an object to be additively manufactured with an additive manufacturing machine, the plurality of object elements comprising a core region and a shell region, the shell region at least partially surrounding the core region; and
forming the plurality of object elements at least in part by irradiating a layer of a build plane with one or more irradiation devices of the additive manufacturing machine;
wherein the irradiation regime for at least one of the plurality of object elements comprises a core-shell irradiation regime and/or wherein the irradiation regime for at least one of the plurality of object elements comprises a core-shell apportioned irradiation regime.

2. The method of any preceding claim, comprising:
irradiating the core region with a first energy beam emitted from a first irradiation device; and
irradiating the shell region with a second energy beam from a second irradiation device.

3. The method of any preceding claim, comprising:
irradiating the core region with an irradiation parameter being at a first setpoint; and
irradiating the shell region with the irradiation parameter being at a second setpoint, the second setpoint differing from the first setpoint.

4. The method of any preceding claim, wherein the irradiation parameter comprises beam power, intensity, intensity profile, power density, spot size, spot shape, scanning pattern, and/or scanning speed.

5. The method of any preceding claim, comprising:
allocating a first portion of the plurality of object elements to a first object element group;
allocating a second portion of the plurality of object elements to a second object element group;
forming the first portion of the plurality of object elements at least in part by irradiating the layer of the build plane with a first irradiation device; and
forming the second portion of the plurality of object elements at least in part by irradiating the layer of the build plane with a second irradiation device;
wherein the first object element group and the second object element group have a substantially balanced aggregate surface area and/or a substantially balanced irradiation time.

6. The method of any preceding claim, wherein an absolute difference in aggregate surface area and/or aggregate irradiation time cannot be decreased by allocating one or more object elements to a different object element group, the different object element group selected from the first object element group, the second object element group, and a third object element group.

7. The method of any preceding claim, comprising:
determining one or more dimensions of the core region and/or the shell region of at least some of the plurality of object elements at least in part to provide substantially balanced aggregate surface areas and/or substantially balanced aggregate irradiation times as between the first object element group and the second object element group.

8. The method of any preceding claim, comprising:
determining one or more dimensions of the core region and/or the shell region of at least some of the plurality of object elements at least in part to provide substantially balanced aggregate surface areas and/or substantially balanced aggregate irradiation times as between the core regions and the shell regions of the plurality of object elements.

9. The method of any preceding claim, comprising:
apportioning at least some of the plurality of object elements between the core region and the shell region based at least in part on a setpoint for a core-shell apportionment factor, the setpoint for the core-shell apportionment factor determined based at least in part on a surface area and/or an irradiation time of the core region and/or the shell region of the respective object element.

10. The method of any preceding claim, comprising:
apportioning the core region between a first irradiation device and a second irradiation device based at least in part on a setpoint for a core region apportionment factor, the setpoint for the core region apportionment factor determined based at least in part on a surface area and/or an irradiation time of core region and/or the shell region of the respective object element.

11. The method of any preceding claim, comprising:
determining an alignment and/or an offset between a core region centroid and a shell region centroid based at least in part on an ordered, random, or semi-random sequence or pattern.

12. The method of any preceding claim, comprising:
determining an overlap region defining a boundary between, and/or a transition from, the core region to the shell region based at least in part on surface area and/or irradiation time of the core region and/or the shell region of the respective object element.

13. The method of any preceding claim, wherein at least some of the plurality of object elements define at least a portion of a pathway passing through a portion of the core region and/or a portion of the shell region of the respective object element.

14. The method of any preceding claim, wherein the plurality of object element groups have substantially balanced aggregate surface areas and/or substantially balanced aggregate irradiation times.

15. The method of any preceding claim, wherein an absolute difference in aggregate surface area and/or aggregate irradiation time as between the plurality of object element groups falls within a specified range, the specified range being an absolute difference of 1% or less.
